# FASCICULE DE BREVET EUROPEEN

(11) **EP 2 658 053 B1**
(45) Date de publication et mention de la délivrance du brevet: **13.05.2015**
(21) Numéro de dépôt: 13305097.1
(22) Date de dépôt: 29.01.2013
(51) Int. Cl.: H02B 1/30, H05K 5/00

(54) **Dispositif d'accouplement d'au moins deux cellules moyenne tension et tableau électrique comportant au moins deux cellules accouplés au moyen d'un tel dispositif**
Koppelungsvorrichtung für mindestens zwei Mittelspannungszellen, und elektrische Schalttafel, die mindestens zwei mit dieser Vorrichtung gekoppelte Zellen umfasst
Device for coupling at least two medium-voltage cubicles and electric panel comprising at least two cubicles coupled by means of one such device

(30) Priorité: 27.04.2012 FR 1201244
(43) Date de publication de la demande: 30.10.2013
(73) Titulaire: Schneider Electric Industries SAS, 92500 Rueil-Malmaison (FR)
(72) Inventeur: Beraud, Didier, 38050 GRENOBLE Cedex 09 (FR); Martin, Ludovic, 38050 GRENOBLE Cedex 09 (FR); Kersusan, Jean-Pierre, 38050 GRENOBLE Cedex 09 (FR)
(74) Mandataire: Colette, Marie-Françoise

(56) Documents cités:
- AU-A1- 2009 200 623
- DE-A1-102008 034 775
- NL-C2- 1 025 719
- US-A- 4 433 881

## Description

### DOMAINE TECHNIQUE

La présente invention concerne un dispositif d'accouplement d'au moins deux cellules électriques moyenne tension appartenant à un tableau électrique, lesdites cellules étant supportées chacune par une structure de support, lesdites structures comportant des traverses, des longerons et des montants, lesdites structures de deux cellules juxtaposées étant accouplées au moins par fixation l'un à l'autre de deux montants en regard ou de deux longerons en regard appartenant respectivement aux deux structures, lesdits montants s'étendant sensiblement parallèlement à la hauteur des cellules tandis que les longerons s'étendent sensiblement parallèlement à la profondeur des cellules.

### ETAT DE LA TECHNIQUE ANTERIEURE

Les solutions classiquement utilisées pour réaliser cet accouplement de cellules sont des solutions d'assemblage de montants placés côte à côte, les tôles de ces montants étant assemblées par vissage ou rivetage.

Or ce type de moyens de fixation est parfois difficile à mettre en oeuvre en des endroits manuellement inaccessibles, tel le compartiment central de l'unité fonctionnelle où il est impossible d'accéder pour le monteur lors de la mise en tableau.

En outre, l'utilisation d'une visserie engendre des risques d'oubli de cette visserie lors de la mise en tableau, et ne présente pas une grande facilité d'assemblage, d'où une perte de temps et surtout de fiabilité lors de la mise en tableau.

La DE 10 2008 034 775 A1 divulgue toutes les caractéristiques du préambule de la revendication 1

### EXPOSE DE L'INVENTION

La présente invention résout ces problèmes et propose un dispositif d'accouplement d'au moins deux cellules, de conception simple, permettant d'assurer un accouplement mécanique fiable de deux cellules lors de la mise en tableau en palliant l'inaccessibilité pour un monteur, et en garantissant la tenue à un arc interne du tableau sans utilisation de visserie.

A cet effet, la présente invention a pour objet un dispositif d'accouplement du genre précédemment mentionné, ce dispositif étant **caractérisé en ce qu'il** comporte au moins une tringle reliée mécaniquement en plusieurs points de sa longueur à des moyens de fixation dits premiers destinés à coopérer respectivement avec des moyens de fixation complémentaires dits seconds appartenant aux deux montants ou aux deux longerons en regard, de manière qu'après un positionnement des premiers moyens de fixation par rapport aux seconds moyens correspondant, cette tringle soit apte à être déplacée de manière à amener les premiers moyens à coopérer avec les seconds moyens de fixation de manière à réaliser en un seul mouvement une fixation en plusieurs points des deux montants, ou longerons, l'un à l'autre, et ainsi une rigidification desdits montants ou longerons permettant d'empêcher les déformations de la structure afin d'augmenter l'étanchéité des cellules en cas d'arc interne à l'intérieure desdites cellules, les moyens de fixation dits premiers comportent chacun un crochet et les moyens de fixation dits seconds comportent chacun une lumière apte à recevoir le crochet, lesdits crochets étant tout d'abord introduits dans les lumières correspondantes, puis la tringle est déplacée axialement de manière à réaliser la solidarisation et la rigidification précitées.

On réalise ainsi un renforcement de la tenue mécanique des montants de deux cellules accolées en tout lieu en multipliant le nombre de points de fixation, de manière à pouvoir assurer les performances d'arc interne en garantissant l'étanchéité par la non déformation des structures. Cette solidarisation peut être réalisée en une seule manoeuvre.

Cette rigidification permet en outre une meilleure tenue aux séismes.

Selon une caractéristique préférée, ces crochets sont solidaires de la tringle.

Selon une autre réalisation, les crochets précités sont montés rotatifs individuellement par rapport à une paroi de la structure reliée par un bord auxdits montants ou longerons, et s'étendant dans un plan sensiblement perpendiculaire au plan desdits montants ou longerons, lesdits crochets étant reliés mécaniquement de manière pouvoir être déplacés ensemble par la tringle entre une position verrouillée et une position déverrouillée.

Selon une caractéristique avantageuse, chaque crochet est associé à un ressort de torsion apte à faciliter la manoeuvre d'accouplement des cellules.

Selon une autre réalisation, les moyens de fixation dits premiers sont des moyens d'encliquetage aptes à coopérer avec des moyens d'encliquetage de forme complémentaire constituant les deuxièmes moyens précités, ladite tringle étant déplacée sensiblement perpendiculairement à sa direction longitudinale pour assurer la fixation précitée.

Selon une caractéristique particulière, l'une au moins des tringles est une tringle dite verticale et coopère avec deux montants en regard appartenant respectivement à deux structures supportant respectivement deux cellules juxtaposées.

Selon une caractéristique particulière, l'une au moins des tringles dites verticales comporte des moyens de fixation au sol ou à un rail du génie civil.

Avantageusement, ces moyens comportent des moyens d'encliquetage.

Selon une caractéristique particulière, ce dispositif comporte au moins une tringle ladite tringle étant actionnable individuellement en exerçant un effort manuel axial de poussée ou de traction par l'intermédiaire d'un moyen de préhension situé à l'une des extrémités de ladite tringle. Avantageusement, cette tringle est verticale et le moyen de préhension est situé à l'extrémité supérieure ou inférieure de la tringle.

Selon une autre caractéristique, l'une au moins des tringles est commandée au moyen d'un actionneur mécanique.

Avantageusement, l'actionneur est accessible à partir de la face avant des cellules.

Selon une autre caractéristique, l'une au moins des tringles est commandée par un dispositif de commande à distance.

Ceci permet de réaliser la solidarisation en des endroits non accessibles à l'utilisateur, d'effectuer la manoeuvre à partir de la face avant, et de vérifier aisément la position enclenchée.

Selon une caractéristique particulière, le dispositif de commande précité est un actionneur électromagnétique.

Selon une autre caractéristique, ce dispositif comporte au moins deux tringles actionnées chacune au moyen d'un actionneur, les deux actionneurs étant reliés mécaniquement et étant commandés par un dispositif de commande à distance.

Selon une autre caractéristique, ce dispositif comporte des moyens de transmission de l'ordre d'actionnement à un dispositif de signalisation situé à l'intérieur des cellules juxtaposées, ou bien à un moyen de gestion des cellules ou du tableau.

Selon une autre caractéristique, les moyens de fixation dits premiers et seconds précités sont commandés par la mise en contact des cellules.

Selon une autre caractéristique, l'actionneur précité est accessible à partir de la face avant des cellules.

La présente invention a encore pour objet un tableau électrique comportant au moins deux cellules électriques moyenne tension accouplées au moyen d'un dispositif d'accouplement comportant les caractéristiques précédemment mentionnées prises seules ou en combinaison, comportant au moins une tringle dite verticale associée à deux montants en regard et appartenant respectivement aux deux cellules et/ou au moins une tringle horizontale associée à deux longerons appartenant respectivement aux deux cellules juxtaposées.

### BREVE DESCRIPTION DES DESSINS.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective illustrant deux structures de support chacune d'une cellule moyenne tension, lesdites cellules étant accouplées au moyen d'un dispositif d'accouplement mis en service à l'avant et à l'arrière des structures, selon une réalisation préférée de l'invention,
- La figure 2 est une vue en perspective illustrant la mise en service d'un dispositif d'accouplement selon l'invention à l'arrière seulement desdites structures de support, selon une autre réalisation de l'invention,
- La figure 3 est une vue partielle de la figure 1 illustrant seulement la partie supérieure des structures, vue de l'arrière par rapport à la figure 1, en position déverrouillée du dispositif d'accouplement,
- La figure 4 est une vue identique à la figure 3 en position verrouillée du dispositif d'accouplement,
- La figure 5 est une vue de détail de la figure 1, illustrant plus particulièrement le dispositif d'accouplement en position active de verrouillage, vu du côté des crochets,
- Les figures 6 et 7 sont deux vues partielles en perspective, illustrant le dispositif d'accouplement respectivement en position verrouillée et en position déverrouillée, vu du côté de la tringle,
- Les figures 8 et 9 sont deux vues en perspective, illustrant le dispositif d'accouplement respectivement en position verrouillée et en position déverrouillée, vu du côté des crochets, et
- Les figures 10 et 11 sont des vues de détail respectivement des figures 6 et 7, vu en coupe suivant un plan vertical parallèle à la direction d'alignement des cellules,

### EXPOSE D-ETAILLE DE PLUSIEURS MODES DE REALISATION PARTICULIERS DE L'INVENTION.

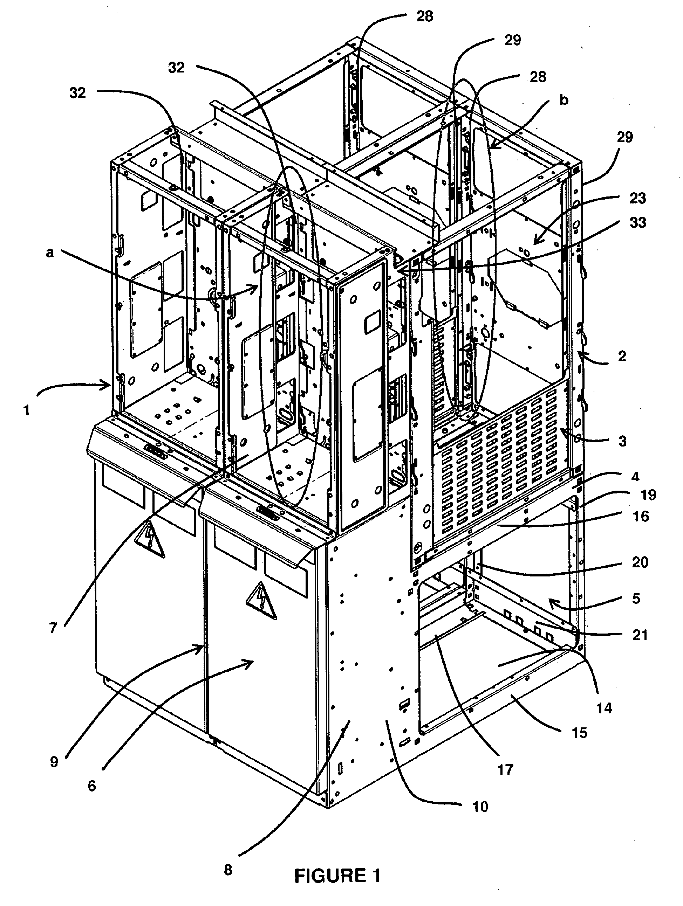

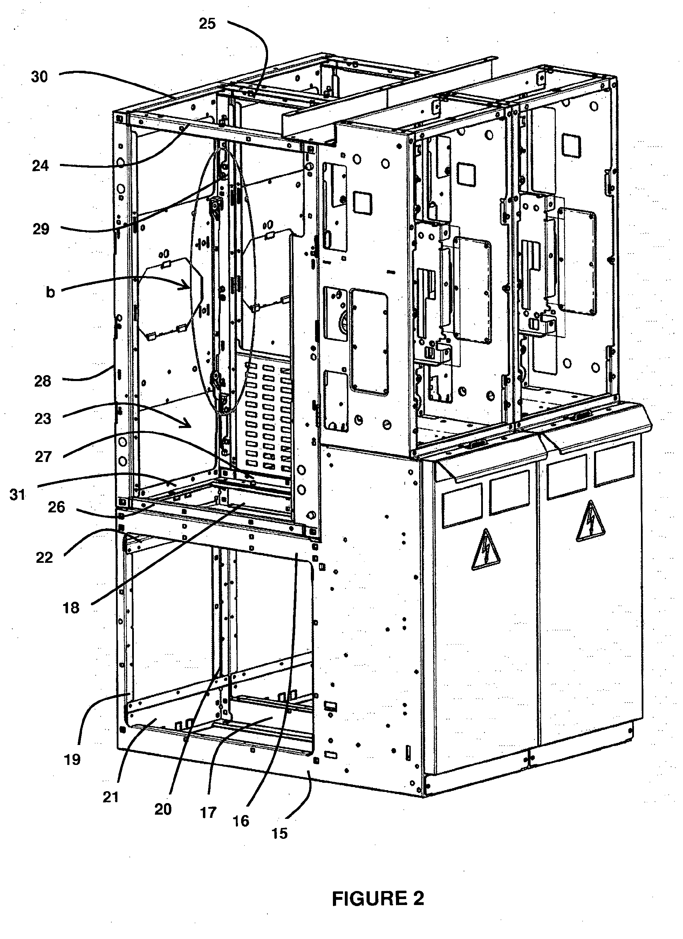

Sur les figures 1 et 2, on voit deux structures de support 1,2 juxtaposées et accolées l'une à l'autre par l'une de leurs faces latérale, lesdites structures étant destinées à supporter chacune une cellule moyenne tension, lesdites cellules appartenant à un tableau électrique moyenne tension, l'ensemble étant monté en appui sur le sol.

Cette structure décrite en détail dans la demande de brevet FR 11 03 799 comporte une partie 3 surélevée par rapport au sol formant une surface d'appui 4 sur laquelle est destinée à être posée la partie principale de l'appareillage moyenne tension. Le compartiment 5 situé sous cette partie principale de l'appareil, comporte un espace vide destiné à permettre l'évacuation des gaz en cas d'arc interne. Cet ensemble comporte également à l'avant de ce compartiment vide un compartiment fermé 6 constituant une boîte à câbles, au-dessus de laquelle est placée une partie 7 destinée à loger les moyens de commande de l'appareillage.

Chaque structure comporte deux flancs 8,9 parallèles l'un par rapport à l'autre, ces deux flancs étant reliés l'un à l'autre par des traverses 21,22. Chacun des deux flancs comporte une partie pleine 10 de forme sensiblement rectangulaire à partir de laquelle s'étendent respectivement deux ailes comportant chacune une ouverture rectangulaire 14 délimitée chacune par deux longerons horizontaux 15,16 et 17,18 reliés par l'une de leurs extrémités, à la partie pleine du flanc correspondant, et par leur extrémité libre à un montant 19,20. Ces deux flancs sont reliés l'un à l'autre par des traverses 21,22.

Le compartiment supérieur arrière 23 de la structure destiné à recevoir la partie principale de l'appareil, est également délimité par des longerons 24, 25, 26, 27, des montants 28,29 et des traverses 30,31.

Selon la réalisation illustrée sur la figure 1, un dispositif d'accouplement a selon l'invention est mis en service pour assurer l'accouplement des deux structures 1,2 au niveau de la face arrière du caisson 7 destiné à recevoir les moyens de commande et un autre dispositif b, au niveau de la face arrière du compartiment supérieur arrière 23 destiné à recevoir l'appareillage principal.

En ces deux emplacements, le dispositif selon l'invention est destiné à assurer la fixation l'un à l'autre de deux montants 32,33 pour le dispositif d'accouplement a, et 28,29 pour le dispositif d'accouplement b, lesdits montants étant situés en regard l'un par rapport à l'autre.

Sur la figure 2, un dispositif d'accouplement b selon l'invention est mis en service seulement pour assurer la fixation de deux montants 28,29 en regard situés au niveau de la face arrière des deux compartiments 23 destinés à recevoir les appareils principaux des deux cellules.

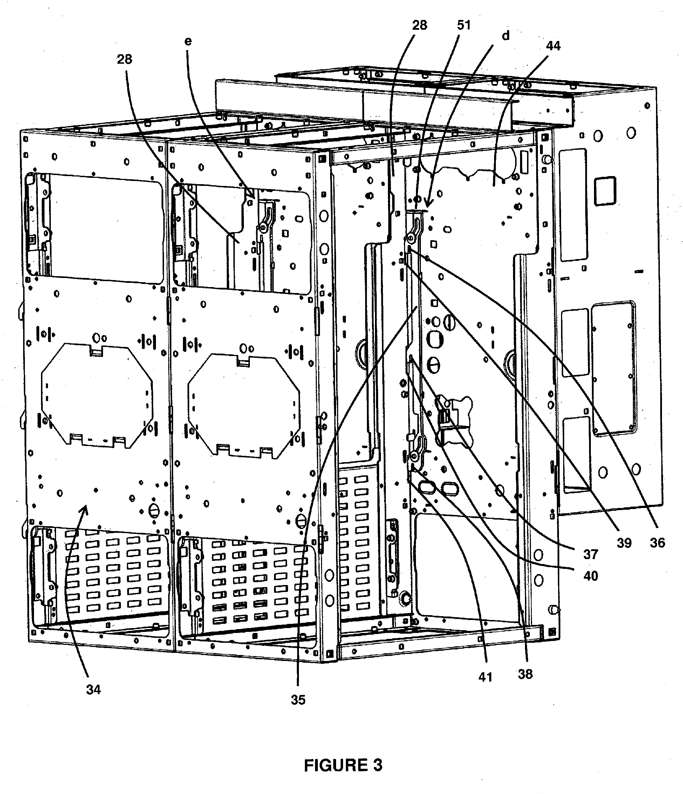

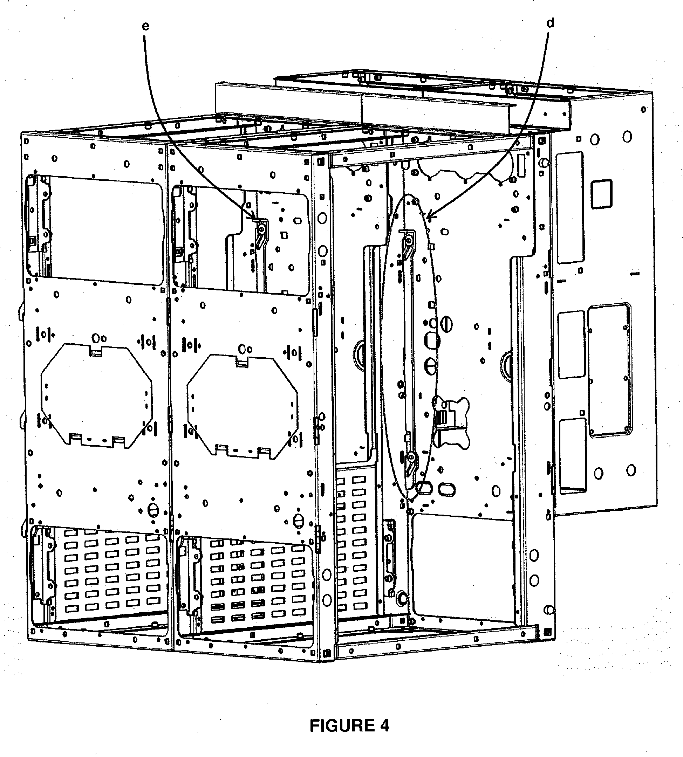

Sur les figure 3 et 4, un premier dispositif d'accouplement d est mis en service pour assurer la fixation de deux montants en regard appartenant respectivement aux deux compartiments arrière des deux cellules, et un autre dispositif d'accouplement e est prêt à être mis en service pour assurer la fixation d'un autre montant situé sur la face avant de l'un des compartiments arrière sur un montant destiné à être amené en regard lors de la juxtaposition d'une autre cellule à gauche de celle 34 déjà en place sur la figure 3.

Sur la figure 3, ces deux dispositifs sont en position déverrouillée alors que sur la figure 4, ces deux dispositifs sont en position verrouillée.

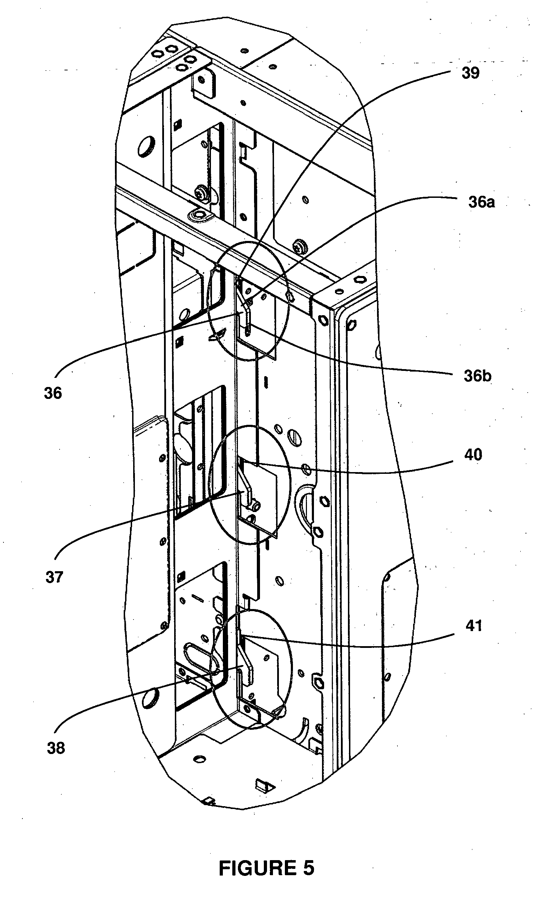

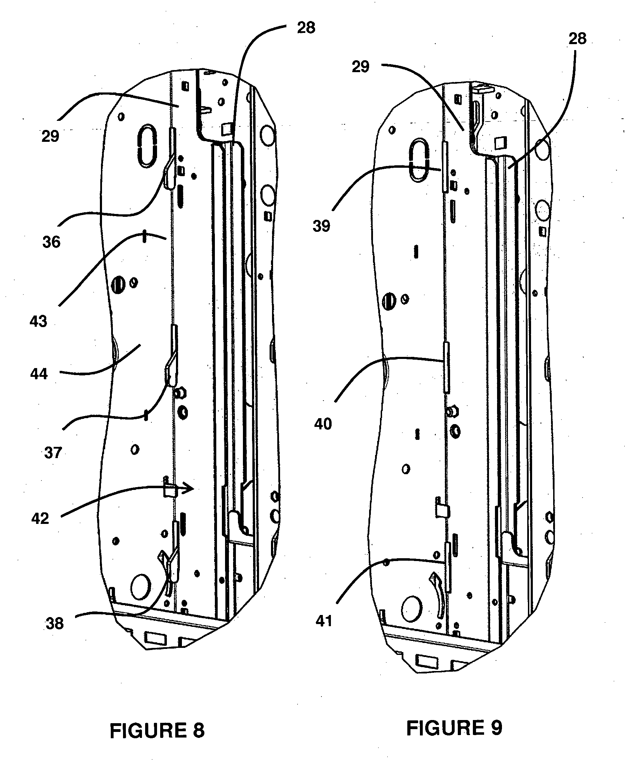

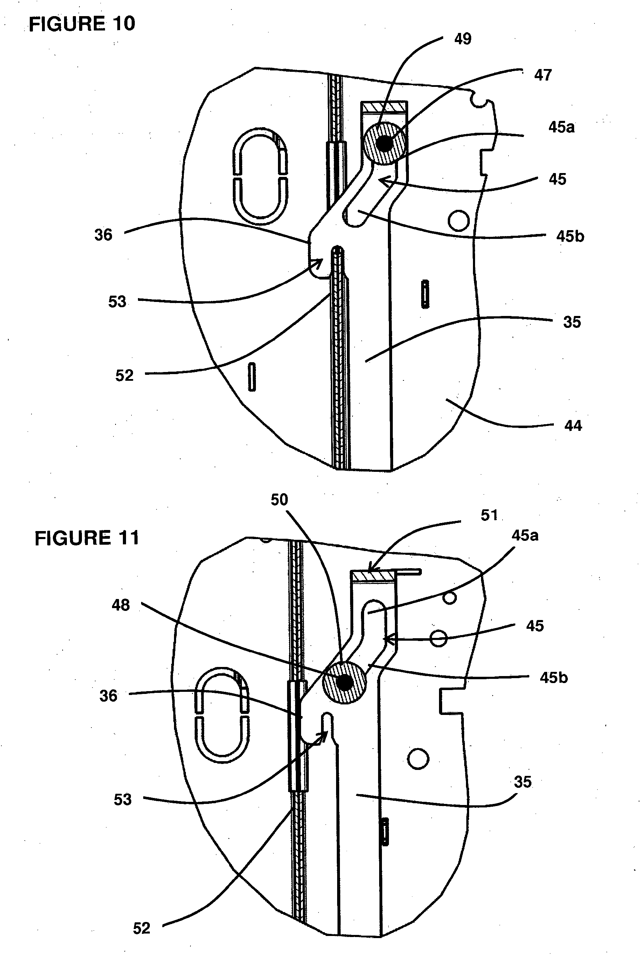

Selon la réalisation préférée illustrée sur les figures 1 à 11, chaque dispositif d'accouplement comporte une tringle 35 comportant trois crochets 36,37,38, chaque crochet étant solidaire de ladite tringle 35 et comportant une première partie 36a s'étendant en formant un angle de sensiblement 45° par rapport à la direction longitudinale de la tringle et une seconde partie 36b s'étendant suivant une direction sensiblement parallèle à la direction longitudinale de la tringle.

Ces trois crochets 36, 37,38 sont destinés à être introduits respectivement dans trois paires de lumières 39, 40, 41, les deux lumières de chaque paire étant situées en regard l'une par rapport à l'autre et appartenant respectivement à deux montants 28,29 ou 32,33 situés en regard l'un par rapport à l'autre. Ces trois paires de lumières sont réparties le long de la direction longitudinale des montants. Pour ce qui concerne le compartiment arrière 23 des cellules, ces montants 28,29 sont constitués par un rebord 42 formé par un pliage sensiblement en équerre d'un bord longitudinal 43 d'une paroi de fond 44 située à l'avant du compartiment arrière de la structure. Pour ce qui concerne les caissons 7 logeant les moyens de commande, chacun des montants 32,33 est constitué par une paroi latérale du caisson. Les trois lumières 39, 40, 41 sont situées à l'angle entre chaque montant 28,29, 32,33 et la paroi de fond 44 associée. Chacune des tringles 35 comporte, au niveau de ses deux extrémités opposées 35a,35b, respectivement deux lumières en forme de v 45,46, destinées à coopérer à coulissement respectivement avec deux tiges 47,48 fixées sur la paroi de fond correspondante 44 et s'étendant sensiblement perpendiculairement à cette paroi.

Ces lumières en forme de v comportent une première partie 45a s'étendant suivant la direction longitudinale de la tringle, et une seconde partie 45b s'étendant en formant un angle de sensiblement 45° par rapport à la direction longitudinale de la tringle.

A chacune de ces tiges est associée une rondelle 49,50 solidaire de la tige correspondante et destinée à emprisonner la tringle entre cette rondelle et la paroi de fond 44.

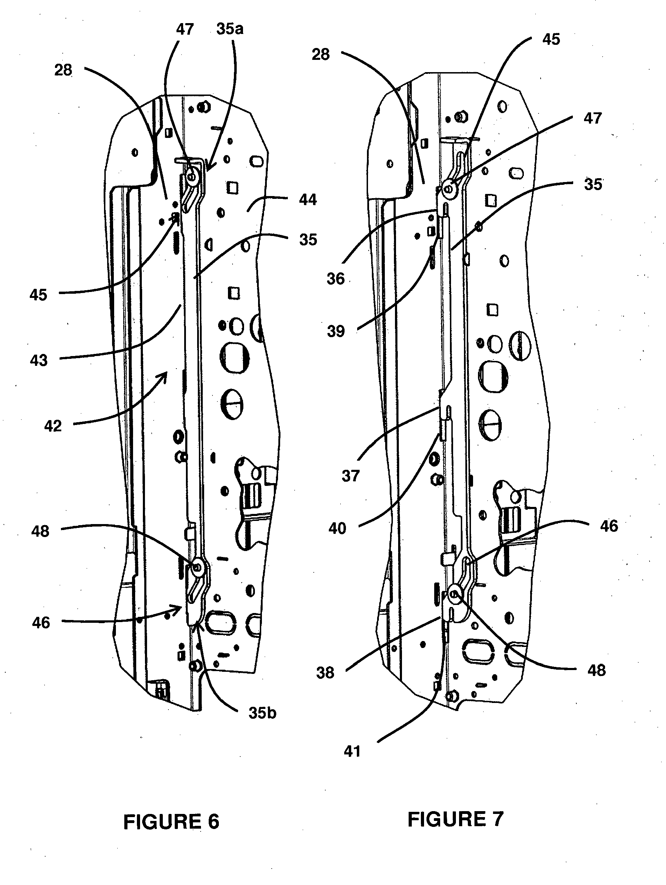

A l'une de ses extrémités située vers la partie supérieure des cellules, opposée au sol, la tringle 35 comporte un élément de préhension 51 apte à permettre le déplacement manuel de la tringle entre une position dite déverrouillée illustrée sur les figures 7, 9 et 11 dans laquelle les tiges 47,48 se trouvent à la partie inférieure des rainures 45,46 en forme de v, et les crochets 36 ,37,38 ne sont pas introduits dans les lumières correspondantes 39,40,41 et une seconde position dite position verrouillée, illustrée sur les figures 6,8 et 10, dans laquelle les crochets sont introduits dans les lumières et assurent la solidarisation des deux montants en regard. Le passage de la position déverrouillée à la position verrouillée est réalisé en exerçant une poussée axiale sur la tringle selon une direction sensiblement parallèle à la direction longitudinale de la tringle.

On peut aussi prévoir un élément de préhension en partie inférieure, ou bien à la fois en partie supérieure et en partie inférieure, ce qui permettrait d'améliorer l'accès au dispositif d'accouplement ou bien d'exercer le même type d'effort axial lorsqu'on verrouille ou bien lorsqu'on déverrouille.

Lors de ce déplacement, la tringle se déplace dans un premier mouvement selon une direction correspondant à la direction de la première partie 45a de la rainure en v 45,46, au cours duquel mouvement les crochets 36,37,38 sont introduits dans les lumières correspondantes 39,40,41, puis dans un second mouvement selon une direction correspondant à celle de la seconde partie 45b de la rainure, au cours duquel mouvement la paroi 52 du montant est introduite dans l' encoche 53 correspondante du crochet correspondant 32.

Selon ces réalisations particulières illustrées sur les dessins, chaque tringle est mise en place séparément en exerçant un effort axial de poussée pour l'introduction ou de traction pour le retrait, ce qui impose d'avoir accès à chacune des tringles. Et si un élément de préhension est présent en haut et en bas, l'accès est facilité d'un côté ou de l'autre.

Selon une réalisation avantageuse non illustrée, l'actionnement de la tringle est réalisé au moyen d'un actionneur mécanique par exemple du type à came coopérant avec une lumière ou encore mettant en oeuvre des bielles, ou constitué par un dispositif de pignon actionnant une crémaillère placée sur une tranche de la tringle. Ou bien un dispositif mettant en oeuvre un pignon dans une lumière, dont un côté possède une crémaillère, ceci pouvant être réalisé n'importe où sur le parcours de la tringle. On notera que dans le cas de l'actionneur du type à came, si en position fermée, la bielle est dans une position proche du point mort, cette bielle pourra verrouiller naturellement cet état.

Cet actionnement pourra avantageusement être réalisé à distance par un mécanisme de commande à distance, comprenant par exemple une liaison mécanique reliant les divers actionneurs entraînant chaque tringle, cette liaison comprenant elle-même sur une face accessible par l'opérateur, un interface permettant son actionnement au moyen du levier d'actionnement des commandes de l'appareillage.

L'information de cet actionnement pourra être transmis électriquement, au moyen par exemple d'un microcontact à un dispositif de signalisation tel un voyant ou à un moyen pour signaler l'état verrouillé ou déverrouillé du mécanisme à un relais de gestion de la cellule ou du tableau.

Ce microcontact peut être actionné par exemple par la tringle ou par le moyen d'actionnement de cette dernière.

On notera également la possibilité d'ajouter sur la tringle ou bien l'actionneur un voyant mécanique symbolisant la position verrouillée.

Avantageusement, pour toutes les réalisations décrites, chaque crochet peut être associé à un ressort de torsion destiné à faciliter la manoeuvre, laquelle sera toujours achevée avantageusement par l'actionnement de la tringle. Par exemple, des crochets pourraient être montés en rotation sur un axe du montant ou bien de la tringle. Ou bien, un ressort pourrait également être prévu sur la tringle elle-même.

Une autre réalisation non illustrée pourrait consister en un système encliquetable lors de la mise en contact de deux cellules contigües, avec par exemple une tringle unique intégrant les crochets ou bien des crochets individuels reliés entre eux , lesdits crochets étant associés à un système élastique permettant leur mise en position, la solidarisation étant de préférence achevée manuellement afin de fiabiliser le positionnement. Ceci afin d'assurer l'engagement des crochets, si pour des raisons de frottement trop importants, les crochets ne peuvent pas être engagés complètement par la seule action des ressorts.

Ces dispositifs pourront éventuellement être multipliés ou couplés, notamment soit pour attaquer la tige en divers points, soit pour mettre en mouvement plusieurs tringles.

L'actionnement de ces dispositifs peut être réalisé à travers un orifice prévu en face avant, tel un orifice de commande, par l'intermédiaire d'un levier de commande.

La signalisation de l'état verrouillé ou non peut se faire sur la face avant également.

Les systèmes d'actionnement permettent de déporter en face avant la manoeuvre de solidarisation des cellules du tableau, ce qui est très utile en cas d'accès difficile et également afin d'effectuer un contrôle visuel.

On notera également que selon une réalisation préférée, les crochets feront partie de la tringle et seront obtenus par découpe. Selon une autre réalisation, ces crochets peuvent être des verrous-crochet indépendants solidaires de la tige et actionnés par elle. Ces crochets pourraient aussi être fixés en rotation sur les montants, et recevoir des ressorts de torsion, destinés à réaliser la mise en position pour l'accouplement, ces crochets pouvant également être actionnés lors du rapprochement des cellules.

Le dispositif selon l'invention peut ainsi être utilisé pour réaliser l'accouplement de deux ou plus de deux cellules dans un tableau électrique, avec des tringles verticales mises en place au niveau de l'interface entre deux montants en regard ou bien des tringles horizontales mises en place au niveau de l'interface entre deux longerons en regard.

On notera que les crochets pourront être de différentes formes, la tringle pourra présenter plusieurs profils différents et différentes sections par exemple rectangulaire, rond, en L etc....Sa taille et sa disposition angulaires, de préférence verticale ou horizontale, pourront également varier. Par exemple, des traverses de solidarisation spécifiques pourront présenter un autre angle.

On notera également que les crochets pourront coopérer avec un ou plusieurs montants suivant la performance visée, et la longueur de la tringle pourra correspondre à celle d'un seul caisson ou correspondre à la hauteur totale de la structure.

On notera également qu'avantageusement, il pourra être prévu d'associer aux tringles verticales un artifice permettant la fixation au sol du tableau.

On pourra donc imaginer diverses sections pour la partie inférieure de la tringle rentrant dans un rail du génie civil. Afin de garantir un positionnement en hauteur, on pourra équiper ce plot inférieur d'un système d'encliquetage.

Ainsi, en une seule manoeuvre, l'accouplement de plusieurs cellules et la fixation au sol pourraient être réalisées.

Ainsi, divers profils et divers types d'encliquetage dans les rails du génie civil peuvent être imaginés, à libérer localement en cas de démontage du tableau.

On a donc réalisé grâce à l'invention, un dispositif d'accouplement d'au moins deux cellules moyenne tension appartenant à un tableau électrique, présentant une grande compacité car d'une part, tous les éléments se trouvent à l'intérieur des cellules, et peuvent occuper tout le volume disponible, ce qui est très avantageux dans le cas des technologies blindées dont l'appareillage peut entrer en contact avec les tôles à la terre et rendre très difficile les accès aux interfaces, d'autre part, par le fait qu'il est possible de réaliser l'accouplement à distance.

Ce dispositif selon l'invention permet également de contenir les déformations inter cellules susceptibles de se produire lors d'essai de type Arc interne, ou lors d'un défaut de ce type sur site, ceci notamment afin de limiter et de contenir les évacuations des gaz dirigées vers l'avant du tableau, ou tout autre face où l'on veut éviter de telles manifestations, notamment afin de garantir la sécurité de l'opérateur lors de commandes locales ou en cas de présence devant la cellule, et de limiter les efforts sur les liaisons entre cellules du tableau ie. les raccordements de type jeu de barres et sur les interfaces avec l'extérieur comme par exemple les raccordements des câbles de puissance.

La présente invention permet d'effectuer une fixation multi points inter cellule dans un environnement manuellement difficilement accessible, à savoir le compartiment coeur de l'unité fonctionnelle où il est très difficile d'accéder pour le monteur lors de la mise en tableau, mais peut être utilisé également même en cas d'accès possible.

L'invention permet également de limiter l'utilisation de visserie, diminuant ainsi les risques d'oubli, rendant plus facile l'assemblage et apportant un gain de temps lors de la mise en tableau.

Parmi d'autres avantages, la qualité de la solidarisation des cellules est améliorée, ce qui garantit le bon positionnement des divers composants du tableau.

La rigidification de l'ossature des cellules d'un tableau est améliorée, ce qui permet de garantir les performances d'arc interne même lorsque la structure est légère et l'épaisseur des tôles réduite.

En effet, la mise en oeuvre d'une tringle qui peut être réalisée dans un soucis d'amélioration de la rigidité des montants aux bons endroits, permet de concevoir des structures assez légères donc économiques tout en conservant de bonnes performances mécaniques et d'étanchéité en cas d'arc interne.

En outre, l'ergonomie de l'installation et du démontage sont améliorées et la fiabilité de l'installation peut être améliorée par le fait que la conformité de l'assemblage et de la fixation avec les normes requises peut être facilement vérifiée en un point accessible par la position correcte d'un voyant.

Bien entendu, l'invention n'est pas limitée aux modes de réalisation décrits et illustrés qui n'ont été donnés qu'à titre d'exemple.

C'est ainsi que lorsque les moyens de fixation sont des moyens d'encliquetage, les crochets de type mâle ou respectivement les crochets de type femelle peuvent être indépendants les uns par rapport aux autres ou bien rendus solidaires au moyen d'une tringle. Dans ce cas, il est nécessaire de prévoir des ressorts ou des dispositifs à déformation élastique pour assurer l'encliquetage. La solution de la tringle solidarisant les crochets est de n'utiliser qu'un seul dispositif élastique qui actionnerait celle-ci.

On notera que lorsque les éléments de préhension seront placés en bas des tringles verticales, la forme des crochets sera inversée par rapport à celle correspondant à un élément de préhension placée à l'extrémité inférieure de la tringle.

On notera que dans le cas de l'utilisation d'un actionneur, celui-ci pourra également garantir le blocage en position, c'est-à-dire le verrouillage.

On notera également que le dispositif de signalisation pourra être un voyant électrique ou même mécanique. Si ce dernier est électrique, il sera nécessaire d'actionner un contact qui transmettra un ordre ou un état. Celui-ci sera avantageusement situé au plus près des moyens de fixation par exemple sur la tringle, ou au niveau du dispositif d'actionnement.

Au contraire, l'invention comprend tous les équivalents techniques des moyens décrits ainsi que leurs combinaisons si celles-ci sont réalisées suivant son esprit.

## Revendications

1. Dispositif d'accouplement d'au moins deux cellules électriques moyenne tension appartenant à un tableau électrique, lesdites cellules étant supportées chacune par une structure de support, lesdites structures comportant des traverses, (21, 22, 30, 31) des longerons (24, 25, 26, 27) et des montants (28, 29, 32, 33), lesdites structures de deux cellules juxtaposées étant accouplées au moins par fixation l'un à l'autre de deux montants en regard ou de deux longerons en regard appartenant respectivement aux deux structures, lesdits montants s'étendant sensiblement parallèlement à la hauteur des cellules tandis que les longerons s'étendent sensiblement parallèlement à la profondeur des cellules,
**caractérisé en ce qu'il** comporte au moins une tringle (35) reliée mécaniquement en plusieurs points de sa longueur à des moyens de fixation dits premiers (36,37,38) destinés à coopérer respectivement avec des moyens de fixation complémentaires dits seconds (39,40,41) appartenant aux deux montants (28,29),(32,33) ou aux deux longerons en regard, de manière qu'après un positionnement des premiers moyens de fixation (36 ,37,38) par rapport aux seconds moyens correspondants (39,40,41), cette tringle (35) soit apte à être déplacée de manière à amener les premiers moyens à coopérer avec les seconds moyens de fixation, de manière à réaliser en un seul mouvement une fixation en plusieurs points des deux montants, ou longerons, l'un à l'autre, et ainsi une rigidification desdits montants ou longerons permettant d'empêcher les déformations de la structure afin d' augmenter l'étanchéité des cellules en cas d'arc interne à l'intérieure desdites cellules, les moyens de fixation dits premiers comportant chacun un crochet (36, 37,38) et les moyens de fixation dits seconds comportant chacun une lumière (39, 40,41) apte à recevoir le crochet, lesdits crochets étant tout d'abord introduits dans les lumières correspondantes, puis la tringle (35) est déplacée axialement de manière à réaliser la solidarisation et la rigidification précitées.

2. Dispositif d'accouplement selon la revendication 1, **caractérisé en ce que** les crochets (36, 37,38) sont solidaires de la tringle (35).

3. Dispositif d'accouplement selon la revendication 1, **caractérisé en ce que** les crochets précités sont montés rotatifs individuellement par rapport à une paroi de la structure reliée par un bord auxdits montants ou longerons, et s'étendant dans un plan sensiblement perpendiculaire au plan desdits montants ou longerons, lesdits crochets étant reliés mécaniquement de manière à pouvoir être déplacés ensemble par la tringle entre une position verrouillée et une position déverrouillée.

4. Dispositif d'accouplement selon l'une quelconque des revendications 1 à 3, **caractérisé en ce que** chaque crochet est associé à un ressort de torsion apte à faciliter la manoeuvre d'accouplement des cellules.

5. Dispositif d'accouplement selon l'une quelconque des revendications précédentes, **caractérisé en ce que** l'une au moins des tringles (35) est une tringle dite verticale et coopère avec deux montants en regard (28,29) et (32,33) appartenant respectivement à deux structures (1,2) supportant respectivement deux cellules juxtaposées.

6. Dispositif d'accouplement selon la revendication 5, **caractérisé en ce que** l'une au moins des tringles dites verticales comporte des moyens de fixation au sol ou à un rail du génie civil.

7. Dispositif d'accouplement selon la revendication 6, **caractérisé en ce que** ces moyens comportent des moyens d'encliquetage.

8. Dispositif d'accouplement selon l'une quelconque des revendications 1 à 7, **caractérisé en ce qu'il** comporte au moins une tringle (35), ladite tringle étant actionnable individuellement en exerçant un effort manuel axial de poussée ou de traction par l'intermédiaire d'un moyen de préhension (51) situé à l'une des extrémités de ladite tringle (35).

9. Dispositif d'accouplement selon l'une quelconque des revendications 1 à 7, **caractérisé en ce qu'il** comporte au moins une tringle verticale (35), ladite tringle verticale étant associée à deux montants (28,29) et (32,33) appartenant respectivement à deux structures appartenant respectivement à deux cellules, ladite tringle verticale étant actionnable individuellement en exerçant un effort manuel axial de poussée ou de traction par l'intermédiaire d'un moyen de préhension (51) situé à l'extrémité supérieure ou inférieure de ladite tringle.

10. Dispositif d'accouplement selon l'une quelconque des revendications précédentes, **caractérisé en ce que** l'une au moins des tringles est commandée au moyen d'un actionneur mécanique.

11. Dispositif d'accouplement selon l'une quelconque des revendications 1 à 10, **caractérisée en ce que** l'une au moins des tringles est commandée par un dispositif de commande à distance.

12. Dispositif d'accouplement selon la revendication 11, **caractérisé en ce que** le dispositif de commande précité est un actionneur électromagnétique.

13. Dispositif d'accouplement selon la revendication 11, **caractérisé en ce qu'il** comporte au moins deux tringles actionnées chacune au moyen d'un actionneur, les deux actionneurs étant reliés mécaniquement et étant commandés par un dispositif de commande à distance.

14. Dispositif d'accouplement selon l'une quelconque des revendications précédentes, **caractérisé en ce qu'il** comporte des moyens de transmission de l'ordre d'actionnement à un dispositif de signalisation situé à l'intérieur des cellules juxtaposées, ou bien à un moyen de gestion des cellules ou du tableau.

15. Dispositif d'accouplement selon l'une quelconque des revendications précédentes, **caractérisé en ce que** les moyens de fixation dits premiers et seconds précités sont commandés par la mise en contact des cellules.

16. Dispositif d'accouplement selon la revendication 12, **caractérisé en ce que** l'actionneur est accessible à partir de la face avant des cellules.

17. Tableau électrique comportant au moins deux cellules électriques moyenne tension accouplées au moyen d'un dispositif d'accouplement selon l'une quelconque des revendications 1 à 18, comportant au moins une tringle (35) dite verticale associée à deux montants en regard (28,29) et (32,33) et appartenant respectivement aux deux cellules et/ou au moins une tringle horizontale associée à deux longerons appartenant respectivement aux deux cellules juxtaposées.

## Patentansprüche

1. Vorrichtung zur gegenseitigen Verbindung von mindestens zwei Mittelspannungs-Schaltzellen einer elektrischen Schaltanlage, welche Schaltzellen jeweils einen Trägerrahmen mit Traversen (21, 22, 30, 31), Querstützen (24, 25, 26, 27) und Längsstützen (28, 29, 32, 33) umfassen, wobei die Verbindung der genannten Trägerrahmen von zwei aneinander gebauten Schaltzellen mindestens durch die gegenseitige Befestigung von zwei einander gegenüberliegenden Längsstützen oder zwei einander gegenüberliegenden Querstützen der jeweiligen Trägerrahmen erfolgt, die genannten Längsstützen annähernd parallel zur Höhe der Schaltzellen und die Querstützen annähernd parallel zur Tiefe der Schaltzellen verlaufen,
**dadurch gekennzeichnet dass** die Vorrichtung mindestens eine, an mehreren Punkten ihrer Längsachse mit sogenannten ersten Befestigungsmitteln (36, 37, 38) mechanisch verbundene Stange (35) umfasst, welche ersten Befestigungsmittel dazu dienen, mit zugeordneten, an den beiden einander gegenüberliegenden Längsstützen (28, 29), (32, 33) bzw. Querstützen ausgebildeten sogenannten zweiten Befestigungsmitteln (39, 40, 41) zusammenzuwirken, derart, dass nach Positionierung der ersten Befestigungsmittel (36, 37,38) in Bezug zu den zugeordneten zweiten Befestigungsmitteln (39, 40, 41) die genannte Stange (35) verschoben werden kann, um dadurch die ersten Befestigungsmittel mit den zweiten Befestigungsmitteln in Eingriff zu bringen und so mit einer einzigen Bewegung eine gegenseitige Befestigung der Längsstützen bzw. der Querstützen an mehreren Punkten sowie eine Versteifung der genannten Längsstützen bzw. Querstützen zu erreichen, die eine Verformung des Trägerrahmens verhindern und so die Dichtigkeit der Schaltzellen bei Auftreten eines Schaltlichtbogens im Inneren der genannten Schaltzellen erhöhen, wobei die sogenannten ersten Befestigungsmittel jeweils einen Haken (36, 37, 38) und die sogenannten zweiten Befestigungsmittel jeweils eine Aussparung (39, 40, 41) zur Aufnahme eines Hakens umfassen und die genannten Haken zunächst in die zugeordneten Aussparungen eingeführt werden und anschließend die Stange (35) axial verschoben wird, um so die genannte gegenseitige Befestigung und Versteifung zu erreichen.

2. Verbindungsvorrichtung nach Anspruch 1, **dadurch gekennzeichnet dass** die Haken (36, 37, 38) fest mit der Stange (35) verbunden sind.

3. Verbindungsvorrichtung nach Anspruch 1, **dadurch gekennzeichnet, dass** die genannten Haken in Bezug zu einer, über einen Rand mit den genannten Längsstützen und Querstützen verbundenen Wand des Trägerrahmens einzeln drehbar gelagert sowie in einer annähernd senkrecht zur Ebene der genannten Längsstützen bzw. Querstützen liegenden Ebene angeordnet sind, wobei die genannten Haken mechanisch so miteinander verbunden sind, dass sie mithilfe der Stange zusammen zwischen einer Verriegelungsstellung und einer Entriegelungsstellung verschoben werden können.

4. Verbindungsvorrichtung nach irgendeinem der Ansprüche 1 bis 3, **dadurch gekennzeichnet, dass** jeder Haken einer Drehfeder zugeordnet ist, die dazu dient, den Vorgang der gegenseitigen Verbindung der Schaltzellen zu erleichtern.

5. Verbindungsvorrichtung nach irgendeinem der vorhergehenden Ansprüche, **dadurch gekennzeichnet dass** mindestens eine der Stangen (35) als sogenannte senkrechte Stange ausgebildet ist und mit zwei einander gegenüberliegenden Längsstützen (28, 29) bzw. (32, 33) zusammenwirkt, die jeweils einem der Trägerrahmen (1, 2) zweier aneinander gebauter Schaltzellen zugeordnet sind.

6. Verbindungsvorrichtung nach Anspruch 5, **dadurch gekennzeichnet, dass** mindestens eine der sogenannten senkrechten Stangen Mittel zur Bodenbefestigung oder Befestigung an einer bauseits vorhandenen Schiene umfasst.

7. Verbindungsvorrichtung nach Anspruch 6, **dadurch gekennzeichnet, dass** die genannten Mittel Schnappmittel umfassen.

8. Verbindungsvorrichtung nach irgendeinem der Ansprüche 1 bis 7, **dadurch gekennzeichnet, dass** sie mindestens eine Stange (35) umfasst, welche Stange durch eine manuell aufgebrachte, axial wirkende Schub- oder Zugkraft mithilfe eines an einem Ende der Stange (35) angeordneten Griffstücks (51) einzeln verschoben werden kann.

9. Verbindungsvorrichtung nach irgendeinem der Ansprüche 1 bis 7, **dadurch gekennzeichnet, dass** sie mindestens eine senkrechte Stange (35) umfasst, welche senkrechte Stange zwei, zu zwei Trägerrahmen zweier Schaltzellen gehörenden Längsstützen (28, 29) und (32, 33) zugeordnet ist und durch eine manuell aufgebrachte, axial wirkende Schub- oder Zugkraft mithilfe eines am oberen oder unteren Ende der genannten Stange (35) angeordneten Griffstücks (51) einzeln verschoben werden kann.

10. Verbindungsvorrichtung nach irgendeinem der vorhergehenden Ansprüche, **dadurch gekennzeichnet dass** mindestens eine der Stangen über ein mechanisches Betätigungsorgan angetrieben wird.

11. Verbindungsvorrichtung nach irgendeinem der Ansprüche 1 bis 10, **dadurch gekennzeichnet, dass** mindestens eine der Stangen über ein Fernbetätigungsorgan angetrieben wird.

12. Verbindungsvorrichtung nach Anspruch 11, **dadurch gekennzeichnet, dass** das genannte Betätigungsorgan als elektromagnetisches Betätigungsorgan ausgebildet ist.

13. Verbindungsvorrichtung nach Anspruch 11, **dadurch gekennzeichnet, dass** sie mindestens zwei Stangen umfasst, die jeweils über ein Betätigungsorgan angetrieben werden, wobei die beiden Betätigungsorgane mechanisch miteinander verbunden sind und über ein Fernbetätigungsorgan angesteuert werden.

14. Verbindungsvorrichtung nach irgendeinem der vorhergehenden Ansprüche, **dadurch gekennzeichnet, dass** sie Mittel umfasst, um den Betätigungsbefehl an eine im Inneren der aneinander gebauten Schaltzellen angeordnete Anzeigevorrichtung oder an ein Mittel zur Steuerung der Schaltzellen oder der Schaltanlage zu übertragen.

15. Verbindungsvorrichtung nach irgendeinem der vorhergehenden Ansprüche, **dadurch gekennzeichnet, dass** die sogenannten ersten und zweiten Befestigungsmittel durch Aneinanderfügen der Schaltzellen gesteuert werden.

16. Verbindungsvorrichtung nach Anspruch 12, **dadurch gekennzeichnet, dass** das Betätigungsorgan von der Frontseite der Schaltzellen her zugänglich ist.

17. Elektrische Schaltanlage mit mindestens zwei, mithilfe einer Verbindungsvorrichtung nach irgendeinem der Ansprüche 1 bis 18 aneinander gebauten Mittelspannungs-Schaltzellen, welche Vorrichtung mindestens eine sogenannte senkrechte Stange (35), die zwei einander gegenüberliegenden Längsstützen (28, 29) und (32, 33) der zwei Schaltzellen zugeordnet ist und/oder mindestens eine waagerechte Stange umfasst, die zwei Querstützen der zwei aneinander gebauten Schaltzellen zugeordnet ist.

## Claims

1. Device for coupling at least two medium-voltage electric cubicles belonging to an electric panel, said cubicles each being supported by a support structure, said structures comprising crossmembers (21, 22, 30, 31), stringers (24, 25, 26, 27) and uprights (28, 29, 32, 33), said structures of two juxtaposed cubicles being coupled at least by fastening together two facing uprights or two facing stringers belonging respectively to the two structures, said uprights extending substantially parallel to the height of the cubicles whereas the stringers extend substantially parallel to the depth of the cubicles,
**characterized in that** it comprises at least one rod (35) mechanically linked at a number of points of its length to so-called first fastening means (36, 37, 38) intended to cooperate respectively with so-called second complementary fastening means (39, 40, 41) belonging to the two uprights (28, 29), (32, 33) or to the two facing stringers, so that, after a positioning of the first fastening means (36, 37, 38) relative to the corresponding second means (39, 40, 41), this rod (35) can be displaced in such a way as to bring the first means to cooperate with the second fastening means, so as to produce, in a single movement, a fastening at a number of points of the two uprights, or stringers, to one another, and thus a stiffening of said uprights or stringers making it possible to prevent the deformations of the structure in order to increase the seal-tightness of the cubicles in the event of internal arcing inside said cubicles, the so-called first fastening means each comprising a hook (36, 37, 38) and the so-called second fastening means each comprising an opening (39, 40, 41) capable of receiving the hook, said hooks being first introduced into the corresponding openings, then the rod (35) is displaced axially so as to produce the abovementioned joining and stiffening.

2. Coupling device according to Claim 1, **characterized in that** the hooks (36, 37, 38) are attached to the rod (35).

3. Coupling device according to Claim 1, **characterized in that** the abovementioned hooks are mounted to rotate individually relative to a wall of the structure linked by an edge to said uprights or stringers, and extending in a plane substantially at right angles to the plane of said uprights or stringers, said hooks being mechanically linked so as to be able to be displaced together by the rod between a locked position and an unlocked position.

4. Coupling device according to any one of Claims 1 to 3, **characterized in that** each hook is associated with a torsion spring capable of facilitating the cubicle coupling manoeuvre.

5. Coupling device according to any one of the preceding claims, **characterized in that** at least one of the rods (35) is a so-called vertical rod and cooperates with two facing uprights (28, 29) and (32, 33) belonging respectively to two structures (1, 2) respectively supporting two juxtaposed cubicles.

6. Coupling device according to Claim 5, **characterized in that** at least one of the so-called vertical rods comprises means for fastening to the ground or to a rail of the civil engineering structure.

7. Coupling device according to Claim 6, **characterized in that** these means comprise snap-fitting means.

8. Coupling device according to any one of Claims 1 to 7, **characterized in that** it comprises at least one rod (35), said rod being able to be actuated individually by exerting a manual axial pushing or pulling force via a gripping means (51) situated at one of the ends of said rod (35).

9. Coupling device according to any one of Claims 1 to 7, **characterized in that** it comprises at least one vertical rod (35), said vertical rod being associated with two uprights (28, 29) and (32, 33) belonging respectively to two structures belonging respectively to two cubicles, said vertical rod being able to be actuated individually by exerting a manual axial pushing or pulling force via a gripping means (51) situated at the top or bottom end of said rod.

10. Coupling device according to any one of the preceding claims, **characterized in that** at least one of the rods is controlled by means of a mechanical actuator.

11. Coupling device according to any one of Claims 1 to 10, **characterized in that** at least one of the rods is controlled by a remote control device.

12. Coupling device according to Claim 11, **characterized in that** the abovementioned control device is an electromagnetic actuator.

13. Coupling device according to Claim 11, **characterized in that** it comprises at least two rods each actuated by means of an actuator, the two actuators being mechanically linked and being controlled by a remote control device.

14. Coupling device according to any one of the preceding claims, **characterized in that** it comprises means for transmitting the actuation order to a signalling device located inside juxtaposed cubicles, or else to a means for managing the cubicles or the panel.

15. Coupling device according to any one of the preceding claims, **characterized in that** the abovementioned so-called first and second fastening means are controlled by bringing the cubicles into contact.

16. Coupling device according to Claim 12, **characterized in that** the actuator can be accessed from the front face of the cubicles.

17. Electric panel comprising at least two medium-voltage electric cubicles coupled by means of a coupling device according to any one of Claims 1 to 16, comprising at least one so-called vertical rod (35) associated with two facing uprights (28, 29) and (32, 33) belonging respectively to the two cubicles and/or at least one horizontal rod associated with two stringers respectively belonging to the two juxtaposed cubicles.
